# EUROPEAN PATENT SPECIFICATION

(11) **EP 3 115 931 B1**
(45) Date of publication and mention of the grant of the patent: **07.09.2022**
(21) Application number: 16177358.5
(22) Date of filing: 30.06.2016
(51) Int. Cl.: G06V 10/44, G06V 20/56, G06V 20/64

(54) **METHOD AND DEVICE FOR DETECTING ROAD DIVIDING OBJECT AS WELL AS RELEVANT PROGRAM AND NON-TRANSITORY COMPUTER-READABLE MEDIUM**
VERFAHREN UND VORRICHTUNG ZUR DETEKTION VON STRASSENTEILUNGSOBJEKTEN SOWIE ZUGEHÖRIGES PROGRAMM UND ÜBERGANGSLOSES COMPUTERLESBARES MEDIUM
PROCÉDÉ ET DISPOSITIF DE DÉTECTION D'OBJET DE DIVISION DE ROUTE AINSI QUE PROGRAMME CORRESPONDANT ET SUPPORT LISIBLE PAR ORDINATEUR NON TRANSITOIRE

(30) Priority: 10.07.2015 CN 201510404764
(43) Date of publication of application: 11.01.2017
(73) Proprietor: Ricoh Company, Ltd., Tokyo 143-8555 (JP)
(72) Inventor: LIU, Dianchao, Haidian District, Beijing 100044 (CN); REN, Jie, Haidian District, Beijing 100044 (CN); LU, Yaojie, Haidian District, Beijing 100044 (CN); Shi, Zhongchao, Haidian District, Beijing 100044 (CN); CHEN, Chao, Haidian District, Beijing 100044 (CN)
(74) Representative: Marks & Clerk LLP

(56) References cited:
- EP-A1- 2 680 247
- EP-A2- 2 662 804
- EP-A2- 2 711 867
- EP-A2- 2 838 051
- US-B1- 8 306 747
- SHINZATO PATRICK Y ET AL: "Road estimation with sparse 3D points from stereo data", 17TH INTERNATIONAL IEEE CONFERENCE ON INTELLIGENT TRANSPORTATION SYSTEMS (ITSC), IEEE, 8 October 2014 (2014-10-08), pages 1688-1693, XP032685901, DOI: 10.1109/ITSC.2014.6957936 [retrieved on 2014-11-14]

## Description

### BACKGROUND OF THE INVENTION

### 1. Field of the Invention

The present disclosure relates to the field of object detection, and more particularly relates to a method and device for detecting at least one object for dividing a road (hereinafter, also called a "road dividing object") as well as the relevant program and non-transitory computer-readable medium.

### 2. Description of the Related Art

A driving assistance system has been widely used up to now. A lane/road detection warning (LDW/RDW) system is a sub system of the driving assistance system. By using the LDW/RDW system, for example, it is possible to avoid a car crash, and to more accurately determine a driving direction, etc. A lane/road detection process is very important to the LDW/RDW system. As long as the relevant road information is known, it is possible to carry out a further process, for example, communicating a warning message. In general, the lane/road detection process is conducted by detecting a road dividing object.

The road dividing object includes a road dividing line, a road shoulder made of stone, a fence, or any other object by which it is possible to mark the region of a road and the parts of the road to be used by a vehicle.

In the conventional road dividing object detection methods, the detection process is usually conducted with respect to a single specific feature (i.e., a single specific road dividing object), for example, one of a fence, a wall, a building, etc. However, actually the circumstance of a road is very complicated sometimes. That is, not only one of the above-mentioned road dividing objects but also pillar-like objects and even a discontinuous object may be included. As a result, in this case, it is very difficult to detect this kind of road dividing object. EP2680247 discloses a periodic stationary object detection system. The input to the detection system is a sequence of images of the environment of the vehicle. For each image the same detection regions are selected and an edge distribution waveform is calculated for each detection region in each image. The integral of the absolute difference between the waveforms of two consecutive images is used as a characteristic to determine whether a periodic stationary object is present in the detection regions.

### SUMMARY OF THE INVENTION

The present disclosure is proposed in light of the above-described problem in the conventional techniques. The objective of the present disclosure is to provide a general-purpose road dividing object detection method and device not needing to conduct restriction on a specific detection object, so that even in a complicated road condition, it is also possible to accurately detect at least one road dividing object.

According to one aspect of the present disclosure, a method for detecting a road dividing object in a three-dimensional target scene is provided in accordance with claim 1. According to another aspect of the present disclosure, a device for detecting a road dividing object in a three-dimensional target scene is provided according to claim 10. According to a further aspect of the present disclosure, a program for causing a computer to carry out the method for detecting a road dividing object in a three-dimensional target scene is provided according to claim 11.

According to another aspect of the present disclosure, a non-transitory computer-readable medium storing computer-executable instructions for execution by a processing system is provided according to claim 12.

As a result, by utilizing the above-described method and device for detecting a road line dividing object in a target scene, it is possible to convert a three-dimensional space into a time series based two-dimensional image feature sequence, so that it is possible to extract a sequence characteristic from the time series based two-dimensional image feature sequence so as to detect at least one road dividing object. In this way, it is possible to detect not only a continuous road dividing object but also a discontinuous road dividing object without conducting detection object restriction. Therefore, the above-described method and device may be applied to an unknown road condition as long as there exists a sequence characteristic able to be detected. That is, even in a complicated road circumstance, it is also possible to detect at least one road dividing object therein by utilizing the above-describe method and device.

### BRIEF DESCRIPTION OF THE DRAWINGS

FIG. 1 illustrates a driving assistance system serving as an example of an application environment of the present disclosure;
FIG. 2 is a flowchart of a road dividing object detection method according to the present disclosure;
FIGS. 3A and 3B illustrate an exemplary image unit selected from an input image;
FIGS. 4A to 4C illustrate an exemplary image unit selected from another input image;
FIGS. 5A to 5F illustrate an exemplary disparity feature sequence in an image unit;
FIGS. 6A to 6D illustrate an exemplary image feature sequence in another image unit;
FIGS. 7A to 7D illustrate two exemplary results detected by using a road dividing object detection method according to the first embodiment of the present disclosure;
FIG. 8 illustrates an exemplary correspondence relation between two image units;
FIG. 9 is a block diagram of a road dividing object detection device according to a second embodiment of the present disclosure; and
FIG. 10 is a block diagram of a road dividing object detection system according to the present disclosure.

### DETAILED DESCRIPTION

In order to let those people skilled in the art better understand the present disclosure, hereinafter, the embodiments of the present disclosure will be concretely described with reference to the drawings. However it should be noted that the same symbols, which are in the specification and the drawings, stand for the constructional elements having basically the same function and structure, and the repeated explanations for the constructional elements are omitted.

The details of the present disclosure will be given according to the following order.
1. Outline of Thought of Invention
2. Embodiments
   2.1 Road Dividing Object Detection Method
   2.2 Road Dividing Object Detection Device
   2.3 Road Dividing Object Detection System
3. Conclusion

### <1. Outline of Thought of Invention>

Before carrying out the detailed description of the embodiments, the thought of the present disclosure is introduced so as to let those people skilled in the art better understand the present disclosure.

As described above, in the conventional techniques, it is difficult to detect a road dividing object in a complicated road circumstance. However, the technique according to the embodiments of the present disclosure proposes converting a road scene (i.e., a target scene) in a three-dimensional space into two-dimensional images along time, and then analyzing the feature of a road dividing object in these two-dimensional images, so that it is possible to detect not only a continuous road dividing object but also a discontinuous one as long as there exists a sequence characteristic able to be detected. According to the embodiments of the present disclosure, a detection object to be detected is not limited to a specific known road dividing object; in other words, an unknown road dividing object may also be detected. As a result, the embodiments may be applied to a complicated road circumstance.

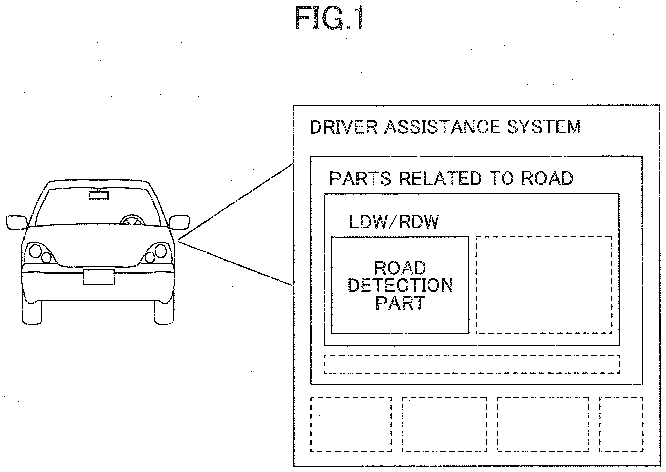

FIG. 1 illustrates a driving assistance system serving as an example of an application environment of the present disclosure.

The driving assistance system presented in FIG. 1 may be helpful to understand the embodiments of the present disclosure. Here it should be noted that the road detection part in the driving assistance system may be realized by software or hardware according to the embodiments of the present disclosure.

### <2. Embodiments>

### <2.1 Road Dividing Object Method>

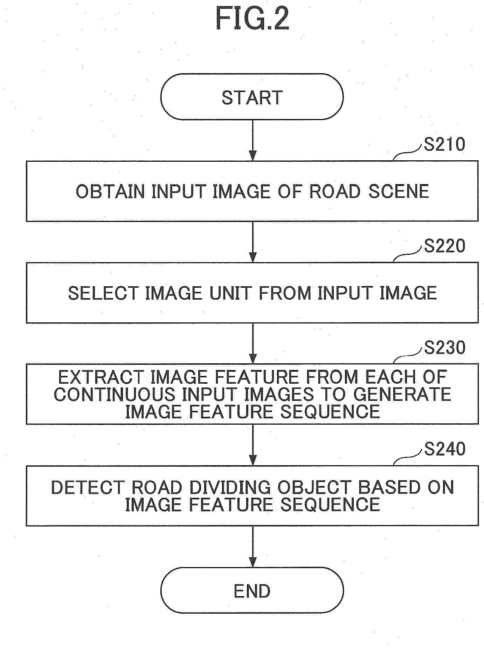

FIG. 2 is a flowchart of a road dividing object detection method according to the present disclosure.

As presented in FIG. 2, the road dividing object detection method includes STEPS S210 to S240.

In STEP S210 of FIG. 2, an input image of a target scene is obtained. A vehicle-mounted camera is used to photograph the target scene including a road region in real time so as to obtain the input image containing the road region.

The input image comprises a disparity map. For example, a two-lens camera may be utilized to capture right and left images of the target scene. And then, by letting any one of the right and left images be a reference image, it is possible to acquire a disparity map of the target scene including the road region according to a stereo matching algorithm or the like.

After obtaining the input image of the target scene, in STEP S220 of FIG. 2, it is possible to select an image unit from the input image. The image unit selected should cover the road dividing object region in the input image so that it is possible to detect the road dividing object by using the image feature within the image unit in the follow-on steps.

In an example, the image unit may be chosen as follows. First a predetermined image processing algorithm such as a familiar edge detection algorithm is applied to the input image so as to obtain a rough road dividing object region in advance. Actually a vehicle mounted camera system is utilized in most application environments, so the road dividing object is usually located on the two sides of the input image. Next a specific region is selected from the input image in such a manner that the specific region covers the rough road dividing object region obtained, so as to serve as the image unit. Here the image unit may have any proper shape such as a rectangle, a circle, and so forth.

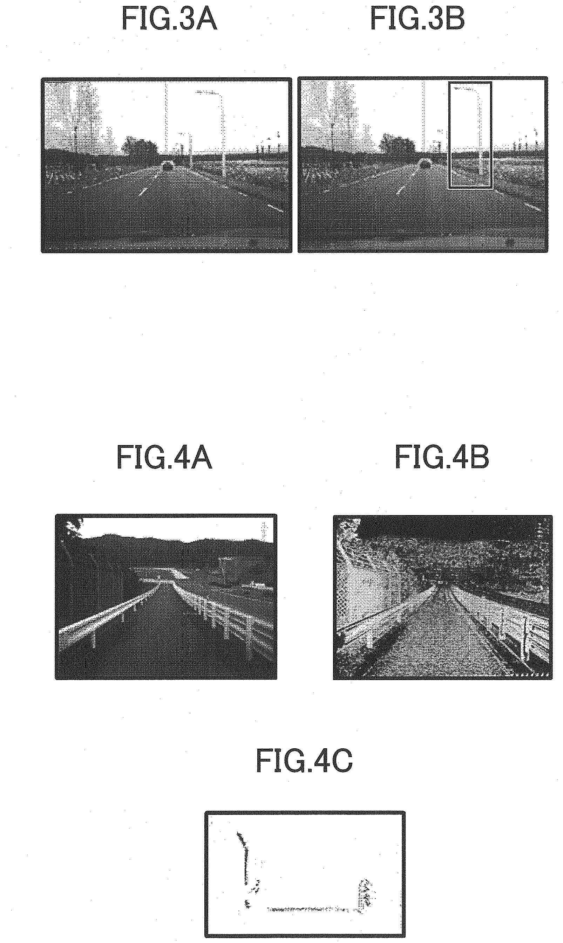

FIGS. 3A and 3B illustrate an exemplary image unit selected from an input image.

FIG. 3A presents the grayscale image of the input image, and FIG. 3B presents a rectangular image unit selected from the grayscale image.

The input image is a disparity map, and the image unit is a depth (or distance) based cross section of the disparity map, i.e., a cross section of the disparity map at a predetermined depth (distance).

FIGS. 4A to 4C illustrate an exemplary image unit selected from another input image.

FIG. 4A presents the grayscale image of the other input image. FIG. 4B presents the disparity map corresponding to the grayscale image. And FIG. 4C presents a depth based cross section selected from the disparity map, which serves as the image unit of the other input image.

In the first embodiment, both a grayscale image and a disparity map corresponding to the grayscale image are input, and the distance information of the disparity map is used to choose a specific region from the grayscale image so as to serve as the relevant image unit.

Alternatively if both a grayscale image and a depth map corresponding to the grayscale image (e.g., the depth map may be acquired based on the relevant disparities, or may be acquired by using a distance measurement sensor such as a radar) are input, then it is possible to utilize the depth information of the depth map to select a specific region from the grayscale image so as to serve as the relevant image unit.

In addition, it is also possible to select more than one image unit as needed.

After the image unit is chosen, its size and position in the follow-on input images are unchanged, and it may serve as a window for monitoring the road dividing object as the vehicle mounted camera used (also called an "image capturing part") moves together with the vehicle. In other words, as time goes by, the number of the follow-on input images increases, and the road dividing object appearing on the window (i.e., the image unit) moves ahead. As a result, the road dividing object in the three-dimensional space may become a combination of two-dimensional images and time series, i.e., a two-dimensional image sequence along time (or called a "time series based two-dimensional image sequence) from the original two-dimensional space plus distances.

Next, in STEP S230 of FIG. 2, it is possible to extract an image feature within the image unit in each of continuous input images so as to make up an image feature sequence. The image feature extracted may include any valid image feature such as a color feature, an edge or gradient feature, a disparity distribution feature, and so on.

In particular, after the image feature within the image unit in each of the continuous input images is extracted, the image features are arranged according to the order of time so as to generate the image feature sequence.

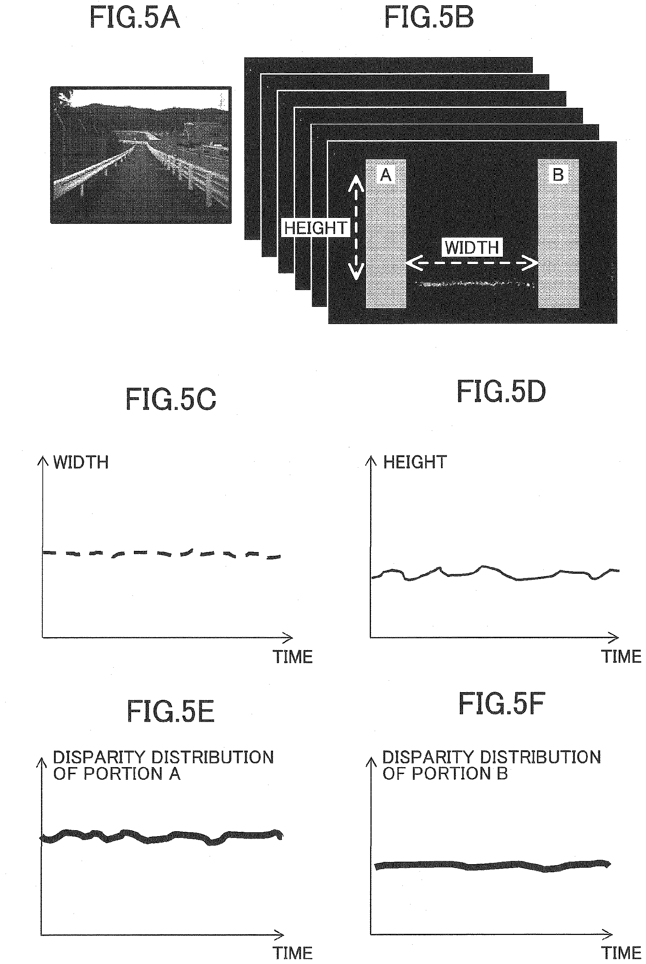

FIGS. 5A to 5F illustrate an exemplary disparity feature sequence in an image unit.

FIG. 5A presents an exemplary input image. FIG. 5B presents the depth based cross sections of plural input images. In FIG. 5B, the portions A and B stand for two feature portions in each of which the disparity distribution has a relatively high density. FIG. 5C presents the time series based sequence of the width feature between the feature portions A and B in the plural input images. FIG. 5D presents the time series based sequence of the height feature of the feature portion A in the plural input images. FIG. 5E presents the time series based sequence of the statistical feature of the disparity distribution (i.e., the number of disparity values) in the feature portion A. And FIG. 5F presents the time series based sequence of the statistical feature of the disparity distribution (i.e., the number of the disparity values) in the feature portion B.

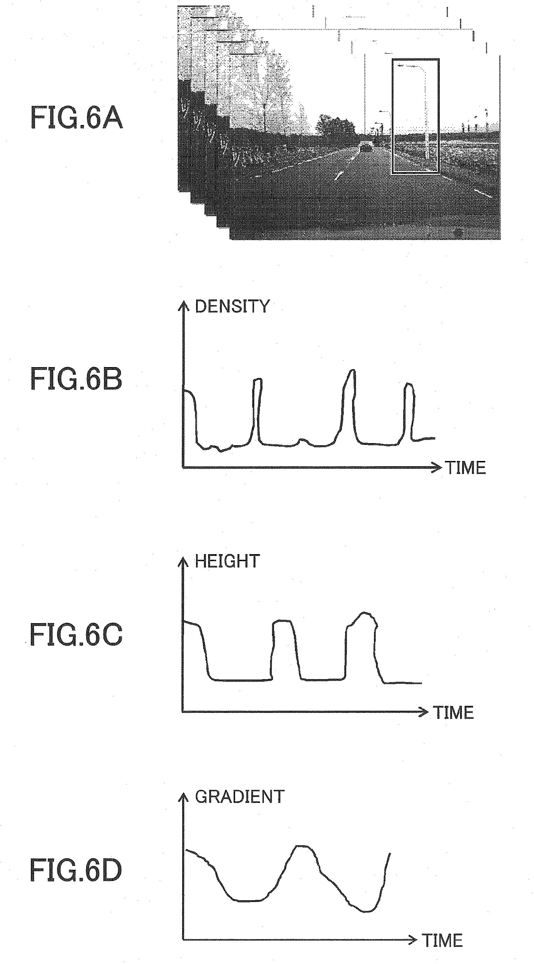

FIGS. 6A to 6D illustrate an exemplary image feature sequence in another image unit.

FIG. 6A presents a rectangular image unit in plural input images. FIG. 6B presents the time series based sequence of the density distribution feature of the pixel points (e.g., the disparity values of the plural input images which are disparity maps) within the image unit in the plural input images. FIG. 6C presents the time series based sequence of the height feature of the pixel point distribution within the image unit in the plural input images. And FIG. 6D presents the time series based sequence of the gradient related statistical feature of the pixel points within the image unit in the plural input images.

Of course, the above-described image features are just examples. That is, it is also possible to extract any other proper image feature from the image unit in each of the continuous input images. Furthermore, one or more image features may be extracted from the image unit in each of the continuous input images so as to make up one or more image feature sequences. Moreover, although the image feature sequence in this embodiment is a one-dimensional feature sequence, it may also be extended as a two-dimensional feature sequence such as a horizontal and vertical histogram based on the relevant disparity values and so on and so forth.

After that, in STEP S240 of FIG. 2, it is possible to detect, on the grounds of the image feature sequence obtained in STEP S230 of FIG. 2, the road dividing object in the target scene.

A sequence characteristic is extracted from the image feature sequence so as to detect the road diving object on the basis of the sequence characteristic. Here the sequence characteristic is a kind of feature which may be able to represent the road dividing object, for instance, a continuous feature, a periodic feature, or a combination of the two.

Generally speaking, a road dividing object mainly includes a fence, a wall, a series of pillars, a series of bushes, a series of trees, a road shoulder made of stone, and so on. In addition, the road dividing object extending along the road direction may present a nearly constant feature (i.e., a continuous feature), a nearly periodically changed feature (i.e., a periodic feature), or a combination of the two.

In regard to a continuous feature, for example, it may be expressed as Feature(t)=Feature(t+x). That is, the feature at any time point t is the same as the feature at the time point t+x; here, x refers to an arbitrary time increment.

As presented in FIG. 5A, a fence serving the road dividing object therein has a continuous feature attribute. The disparity distribution width feature in FIG. 5C, the disparity distribution height feature in FIG. 5D, and the disparity distribution features in FIGS. 5E and 5F related to the fence are nearly constant along time, respectively. As a result, if the feature related values of the relevant image feature sequence along time are unchanged, then it may be said that there exists a continuous road dividing object.

In regard to a periodic feature, for instance, it may be expressed as Feature(t)=Feature(t+T)=Feature(t+2T). That is, the feature changes periodically according to a time period T.

As presented in FIG. 6A, a series of lampposts serving as the road dividing object therein have a periodic feature attribute. As a result, the pixel point density feature in FIG. 6B, the pixel point distribution height feature in FIG. 6C, and the gradient related statistical feature in FIG. 6D of the series of lampposts present periodic features, respectively. As a result, on the basis of this, it is possible to determine that there exists a periodical road dividing object.

Here it should be noted that the relevant periodic information may be extracted by using many approaches. For example, a frequency domain analysis based approach, a Fourier transform based approach, a spectral decomposition based approach, and so forth may be adopted for determining the time period.

When extracting the periodic feature, optionally it is also possible to conduct a correction step with respect to the continuous input images (also called a "time series based frame sequence"), i.e., the distances between the adjacent input images thereof. The purpose of this correction step is to ensure that the scales of the time series based feature sequence are consistent when carrying out conversion from the three-dimensional space into the time series based two-dimensional images, so as to avoid the distortion of the features therein.

In particular, it is possible to detect the moving velocity of the image capturing part used, and then, to carry out the correction step on the grounds of the moving velocity. If the moving velocity is constant, then it is not necessary to conduct the correction process; otherwise, it is necessary to determine, on the basis of the velocity variation, the distances between the adjacent frames including the image unit, i.e., to adjust the time series based positions of the adjacent frames. After that, it is possible to extract the periodic feature from the corrected image feature sequence. In addition, if the direction of the moving velocity is changed, then it is also possible to adjust the time series based positions of the image unit. However, since the velocity change between two adjacent frames is usually very small, the correction step may be also omitted.

After extracting the sequence characteristic, it is possible to detect the road dividing object on the basis of the sequence characteristic. That is, it is possible to detect the road dividing object in the target scene by determining the position of the road dividing object corresponding to the sequence characteristic.

Particularly, in an example, first it is possible to acquire pixel points in an input image, corresponding to the sequence characteristic extracted, for instance, a continuous feature or a periodic feature. And then, by conducting projection with respect to the pixel points on X and Y axes of the input image, it is possible to detect the road dividing object on the basis of the projection of the pixel points. For example, it is possible to fit the projection of the pixel points to obtain a straight or curved line so as to serve as a road boundary line. Alternatively it is possible to detect a road dividing object surface on the grounds of both the projection of the pixel points and the pixel points in the input image, corresponding to the sequence characteristic.

Of course, the present disclosure is not limited to the above-described road dividing object detection approach. That is, it is also possible to adopt any other proper approach, for example, a CCA (Connected Component Analysis) approach based on the sequence characteristic.

After that, it is possible to output the road boundary line or the road dividing object surface to serve as the road dividing object detection result, thereby being able to carry out a proper driving control, etc., on the basis of the result.

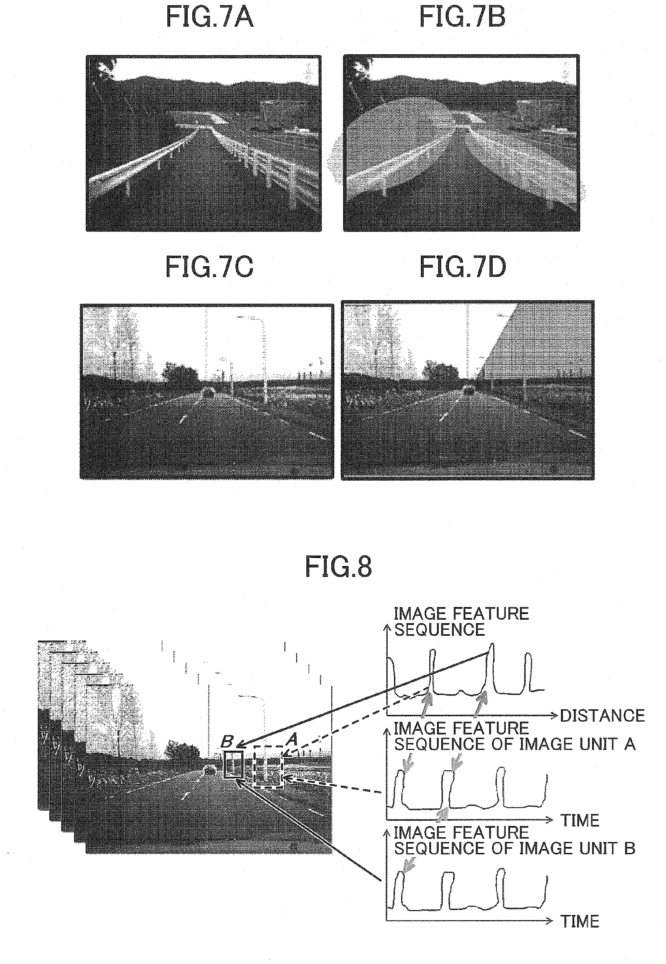

FIGS. 7A to 7D illustrate two exemplary results detected by using the road dividing object detection method according to this embodiment.

FIGS. 7A and 7C illustrate two input images, respectively. FIG. 7B illustrates the road dividing object detection result corresponding to the input image in FIG. 7A. In this case, the road dividing object detection result includes two fences. FIG. 7D illustrates the road dividing object detection result corresponding to the input image in FIG. 7C. In this case, the road dividing object detection result includes a series of lampposts.

In addition, as described above, one or more image units may be selected. If plural image units are chosen, then there may exist a case where there is a correspondence relation between two image units.

FIG. 8 illustrates an exemplary correspondence relation between two image units.

As presented in FIG. 8, two image units A and B are selected for instance. At a time point T, the two image units are rectangles A and B, respectively, and they are located at positions from which to the image capturing part used are different (e.g., located in first and second input images among the continuous input images), and occupy different sizes. However, as time goes by, at a time point T+t, the lamppost within the rectangle B relatively moves into the rectangle A. That is, the lamppost within the rectangle A at the time point T+t and the lamppost within the rectangle B at the time point T are the same one.

In other words, an image unit U(d,t) of a t-th frame whose distance to the image capturing part used is d and an image unit U(d-x,t+a) of a (t+a)-th frame whose distance to the image capturing part used is d-x have a correspondence relation. This is equivalent to a case where a same target is in images having different resolution powers. In general, whether this kind of correspondence relation exists may be determined on the basis of both the moving velocity of the image capturing part used and the distance between the two image units. As such, optionally it is possible to conduct an enhancement (or emphasis) step with respect to the relevant image feature on the grounds of the correspondence relation between the two image units. For example, it is possible to use the extracted image feature within the image unit A (also called a "first image unit") in a first input image of the continuous input images to enhance the extracted image feature within the image unit B (also called a "second image unit") in a second input image immediately prior to the first input image of the continuous input images. In this way, it is possible to let the image features extracted from the image units be finer, thereby being able to improve the road dividing object detection accuracy.

As a result, by utilizing the road dividing object detection method according to this embodiment, it is possible to convert a three-dimensional space into a time series based two-dimensional image feature sequence, so that it is possible to extract a sequence characteristic from the time series based two-dimensional image feature sequence so as to detect at least one road dividing object. In this way, it is possible to detect not only a continuous road dividing object but also a discontinuous road dividing object without conducting detection object restriction. Therefore, this kind of road dividing object detection method may be applied to an unknown road condition as long as there exists a sequence characteristic able to be detected. That is, even in a complicated road circumstance, it is also possible to detect at least one road dividing object therein by utilizing this kind of road dividing object detection method.

### <2.2 Road Dividing Object Device>

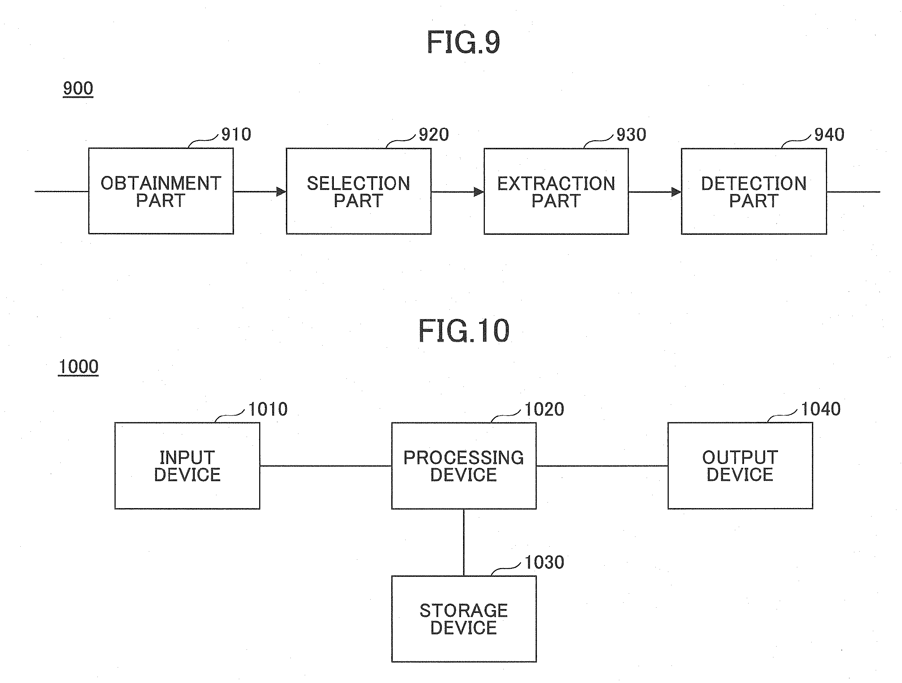

In what follows, a road dividing object detection device according to a second embodiment of the present disclosure will be depicted by referring to FIG. 9.

FIG. 9 is a block diagram of a road dividing object detection device 900 according to this embodiment.

As presented in FIG. 9, the road dividing object detection device 900 includes an obtainment part 910, a selection part 920, an extraction part 930, and a detection part 940 which are configured to carry out STEPS S210 to S240 of the road dividing method according to the first embodiment of the present disclosure, respectively.

Here it should be noted that since STEPS S210 to S240 of the road dividing method according to the first embodiment of the present disclosure have been described in detail above, the repeated explanations are omitted.

Furthermore, the road dividing object detection device 900 may further include a correction part (not presented in the drawings) which may be configured to carry out the correction step described in the first embodiment of the present disclosure. For the sake of convenience, the repeated explanation is omitted here.

Moreover, the road dividing object detection device 900 may further include an enhancement part (not presented in the drawings) which may be configured to conduct the enhancement step depicted in the first embodiment. For the sake of convenience, the repeated explanation is also omitted here.

As a result, by utilizing the road dividing object detection device according to this embodiment, it is possible to convert a three-dimensional space into a time series based two-dimensional image feature sequence, so that it is possible to extract a sequence characteristic from the time series based two-dimensional image feature sequence so as to detect at least one road dividing object. In this way, it is possible to detect not only a continuous road dividing object but also a discontinuous road dividing object without conducting detection object restriction. Therefore, this kind of road dividing object detection device may be applied to an unknown road condition as long as there exists a sequence characteristic able to be detected. That is, even in a complicated road circumstance, it is also possible to detect at least one road dividing object therein by utilizing this kind of road dividing object detection device.

### <2.3 Road Dividing Object System>

In what follows, a road dividing object detection system according to the present disclosure will be set forth by referring to FIG. 10.

FIG. 10 is a block diagram of a road dividing object detection system 1000.

As presented in FIG. 10, the road dividing object detection system 1000 may include an input device 1010, a processing device 1020, a storage device 1030, and an output device 1040.

The input device 1010 may be configured to input images to be processed from the outside, i.e. disparity maps, and may include a conventional one, for example.

The processing device 1020 may be configured to implement the road dividing object detection method according to the first embodiment or to serve as the road dividing object detection device according to the second embodiment, and may include a conventional one, for instance.

The storage device 1030 may be configured to store the relevant images and data when conducting the road dividing object detection method according to the first embodiment, and may include a conventional one, for example.

The output device 1040 may be configured to output the result obtained after carrying out the road dividing object detection method according to the first embodiment, and may include a conventional one, for instance.

Of course, the road dividing object detection system 1000 presented in FIG. 10 may further include other parts as needed, such as a bus, an input/output interface, and so forth.

As a result, by utilizing the road dividing object detection system, it is possible to convert a three-dimensional space into a time series based two-dimensional image feature sequence, so that it is possible to extract a sequence characteristic from the time series based two-dimensional image feature sequence so as to detect at least one road dividing object. In this way, it is possible to detect not only a continuous road dividing object but also a discontinuous road dividing object without conducting detection object restriction. Therefore, this kind of road dividing object detection system may be applied to an unknown road condition as long as there exists a sequence characteristic able to be detected. That is, even in a complicated road circumstance, it is also possible to detect at least one road dividing object by utilizing this kind of road dividing object detection system.

### <3. Conclusion>

Up to here, the road dividing object detection method, device, and system according to the present disclosure have been described in detail.

As a result, by utilizing the road dividing object detection method, device, and system, it is possible to convert a three-dimensional space into a time series based two-dimensional image feature sequence, so that it is possible to extract a sequence characteristic from the time series based two-dimensional image feature sequence so as to detect at least one road dividing object. In this way, it is possible to detect not only a continuous road dividing object but also a discontinuous road dividing object without conducting detection object restriction. Therefore, these kinds of road dividing object detection method, device, and system may be applied to an unknown road condition as long as there exists a sequence characteristic able to be detected. That is, even in a complicated road circumstance, it is also possible to detect at least one road dividing object by utilizing these kinds of road dividing object detection method, device, and system.

Moreover, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

## Claims

1. A method for detecting a road dividing object in a three-dimensional target scene, comprising:
obtaining a two-dimensional input image of the target scene (S210) using an image-capturing part, wherein the image-capturing part is a vehicle mounted camera and the input image further comprises a disparity map;
selecting an image unit from the input image (S220), the image unit covering a road dividing object region of the input image, wherein the image unit comprises a cross section of the disparity map at a predetermined distance from the image-capturing part and a size and position of the image unit within the input image remains unchanged in the continuous sequence of input images;
extracting a respective image feature as a value describing the respective image unit in each of a continuous sequence of two-dimensional input images of the target scene, so as to generate an image feature sequence (S230), wherein the image features comprise features extracted from regions of the image unit with a high density of points from the cross section of the disparity map; and
detecting the road dividing object based on the image feature sequence (S240), wherein features that remain constant or change periodically along the feature sequence correspond to dividing objects.

2. The method according to claim 1, wherein, the selecting the image unit from the input image comprises:
performing preprocessing on the input image so as to acquire a location of the road dividing object in the input image; and
selecting, from the input image, a specific region covering the acquired road dividing object location, to serve as the image unit.

3. The method according to claim 2, wherein the preprocessing comprises applying an edge detection algorithm to the input image.

4. The method according to any one of claims 1 to 3, wherein, the detecting the road dividing object based on the image feature sequence comprises:
extracting an image feature from the image feature sequence; and
detecting the road dividing object based on the image feature.

5. The method according to claim 4, wherein, the image feature is at least one of (i) a continuous feature, or (ii) a periodic feature.

6. The method according to claim 5, further comprising:
detecting a moving velocity of the image capturing part for capturing the continuous input images of the target scene;
correcting, based on the moving velocity, time series based positions of any two adjacent ones among the continuous input images so as to acquire a corrected image feature sequence; and
extracting the periodic feature from the corrected image feature sequence.

7. The method according to claim 4, wherein, the detecting the road dividing object based on the image feature comprises:
obtaining pixel points in an input image, corresponding to the image feature;
projecting the pixel points on X and Y axes of the input image so as to acquire projection of the pixel points; and
detecting the road dividing object based on the projection of the pixel points.

8. The method according to claim 1, wherein,
the selecting the image unit from the input image comprises:
selecting plural image units from the input image, and
the extracting the respective image feature as a value describing the respective image unit in each of the continuous sequence of two-dimensional input images comprises:
extracting an image feature within each of the plural image units in each of the continuous input images so as to generate plural image feature sequences.

9. The method according to claim 8, further comprising:
determining a correspondence relation between a first image unit and a second image unit among the plural image units; and
utilizing, based on the correspondence relation, the extracted image feature within the first image unit in a first image of the continuous sequence of two-dimensional input images to enhance the extracted image feature within the second image unit in a second input image prior to the first image of the continuous sequence of two-dimensional input images.

10. A device (900) for detecting a road dividing object in a three-dimensional target scene, comprising:
an obtainment part (910)configured to obtain a two-dimensional input image of the target scene using an image capturing part, wherein the image-capturing part is a vehicle mounted camera and the input image further comprises a disparity map;
a selection part (920) configured to select an image unit from the input image, the image unit covering a road dividing object region of the input image, wherein the image unit comprises a cross section of the disparity map at a predetermined distance from the image-capturing part and a size and position of the image unit within the input image remains unchanged in the continuous sequence of input images;
an extraction part (930) configured to extract a respective image feature as a value describing the respective image unit in the each of a continuous sequence of two-dimensional input images of the target scene so as to generate an image feature sequence, wherein the image features comprise features extracted from regions of the image unit with a high density of points from the cross section of the disparity map; and
a detection part (940) configured to detect the road dividing object based on the image feature sequence, wherein features that remain constant or change periodically along the feature sequence correspond to dividing objects.

11. A program for causing a computer to carry out the method according to claim 1.

12. A non-transitory computer-readable medium storing computer-executable instructions for execution by a processing system, wherein, the computer-executable instructions, when executed, cause the processing system to carry out the method according to claim 1.

## Patentansprüche

1. Verfahren zum Ermitteln eines straßenteilenden Objekts in einer dreidimensionalen Zielszene, umfassend:
Erlangen eines zweidimensionalen Eingangsbildes der Zielszene (S210) unter Verwendung eines Bildaufnahmeteils, worin der Bildaufnahmeteil eine fahrzeugmontierte Kamera ist und das Eingangsbild ferner eine Disparitätskarte umfasst;
Auswählen einer Bildeinheit aus dem Eingangsbild (S220), wobei die Bildeinheit einen straßenteilenden Objektbereich des Eingangsbildes abdeckt, worin die Bildeinheit einen Querschnitt der Disparitätskarte in einem vorbestimmten Abstand vom Bildaufnahmeteil umfasst und eine Größe und Position der Bildeinheit innerhalb des Eingangsbildes in der kontinuierlichen Folge von Eingangsbildern unverändert bleibt;
Extrahieren eines jeweiligen Bildmerkmals als einen Wert, der die jeweilige Bildeinheit in jedem aus einer kontinuierlichen Folge von zweidimensionalen Eingangsbildern der Zielszene beschreibt, um dadurch eine Bildmerkmalsfolge zu erzeugen (S230), worin die Bildmerkmale Merkmale umfassen, die aus Bereichen der Bildeinheit mit einer hohen Dichte von Punkten aus dem Querschnitt der Disparitätskarte extrahiert wurden; und
Ermitteln des straßenteilenden Objekts auf der Grundlage der Bildmerkmalsfolge (S240), worin Merkmale, die konstant bleiben oder sich entlang der Merkmalsfolge periodisch ändern, teilenden Objekten entsprechen.

2. Verfahren nach Anspruch 1, worin das Auswählen der Bildeinheit aus dem Eingangsbild umfasst:
Durchführen einer Vorverarbeitung auf dem Eingangsbild, um dadurch eine Position des straßenteilenden Objekts im Eingangsbild zu erfassen; und
Auswählen eines spezifischen Bereichs aus dem Eingangsbild, der die erfasste Position des straßenteilenden Objekts abdeckt, um als die Bildeinheit zu dienen.

3. Verfahren nach Anspruch 2, worin die Vorverarbeitung umfasst: Anwenden eines Kantenermittlungsalgorithmus auf das Eingangsbild.

4. Verfahren nach einem der Ansprüche 1 bis 3, worin das Ermitteln des straßenteilenden Objekts auf der Grundlage der Bildmerkmalsfolge umfasst:
Extrahieren eines Bildmerkmals aus der Bildmerkmalsfolge; und
Ermitteln des straßenteilenden Objekts auf der Grundlage des Bildmerkmals.

5. Verfahren nach Anspruch 4, worin das Bildmerkmal mindestens eines von Folgendem ist: (i) ein kontinuierliches Merkmal oder (ii) ein periodisches Merkmal.

6. Verfahren nach Anspruch 5, ferner umfassend:
Ermitteln einer Bewegungsgeschwindigkeit des Bildaufnahmeteils zum Aufnehmen der kontinuierlichen Eingangsbilder der Zielszene;
auf der Bewegungsgeschwindigkeit basierendes Korrigieren zeitreihenbasierter Positionen zweier beliebiger benachbarter Bilder unter den kontinuierlichen Eingangsbildern, um dadurch eine korrigierte Bildmerkmalsfolge zu erfassen; und
Extrahieren des periodischen Merkmals aus der korrigierten Bildmerkmalsfolge.

7. Verfahren nach Anspruch 4, worin das Ermitteln des straßenteilenden Objekts auf der Grundlage des Bildmerkmals umfasst:
Erlangen von Pixelpunkten in einem Eingangsbild, die dem Bildmerkmal entsprechen,
Projizieren der Pixelpunkte auf die x- und y-Achsen des Eingangsbildes, um dadurch eine Projektion der Pixelpunkte zu erlangen; und
Ermitteln des straßenteilenden Objekts auf der Grundlage der Projektion der Pixelpunkte.

8. Verfahren nach Anspruch 1, worin
das Auswählen der Bildeinheit aus dem Eingangsbild umfasst:
Auswählen mehrerer Bildeinheiten aus dem Eingangsbild, und
das Extrahieren des jeweiligen Bildmerkmals als einen Wert, der die jeweilige Bildeinheit in jedem aus der kontinuierlichen Folge von zweidimensionalen Eingangsbildern beschreibt, umfasst:
Extrahieren eines Bildmerkmals innerhalb jeder der Vielzahl von Bildeinheiten in jedem der kontinuierlichen Eingangsbilder, um dadurch eine Vielzahl von Bildmerkmalsfolgen zu erzeugen.

9. Verfahren nach Anspruch 8, ferner umfassend:
Bestimmen einer Korrespondenzbeziehung zwischen einer ersten Bildeinheit und einer zweiten Bildeinheit aus der Vielzahl von Bildeinheiten; und
auf der Korrespondenzbeziehung basierendes Verwenden des extrahierten Bildmerkmals innerhalb der ersten Bildeinheit in einem ersten Bild der kontinuierlichen Folge von zweidimensionalen Eingabebildern, um das extrahierte Bildmerkmal innerhalb der zweiten Bildeinheit in einem zweiten Eingabebild vor dem ersten Bild der kontinuierlichen Folge von zweidimensionalen Eingabebildern zu verbessern.

10. Vorrichtung (900) zum Ermitteln eines straßenteilenden Objekts in einer dreidimensionalen Zielszene, umfassend:
einen Erlangungsteil (910), der dafür konfiguriert ist, ein zweidimensionales Eingangsbild der Zielszene unter Verwendung eines Bilderfassungsteils zu erlangen, worin der Bilderfassungsteil eine fahrzeugmontierte Kamera ist und das Eingangsbild ferner eine Disparitätskarte umfasst;
einen Auswahlteil (920), der dafür konfiguriert ist, eine Bildeinheit aus dem Eingangsbild auszuwählen, wobei die Bildeinheit einen straßenteilenden Objektbereich des Eingangsbildes abdeckt, worin die Bildeinheit einen Querschnitt der Disparitätskarte in einem vorbestimmten Abstand vom Bildaufnahmeteil umfasst und eine Größe und Position der Bildeinheit innerhalb des Eingangsbildes in der kontinuierlichen Folge von Eingangsbildern unverändert bleibt;
einen Extraktionsteil (930), der dafür konfiguriert ist, ein jeweiliges Bildmerkmal als einen Wert zu extrahieren, der die jeweilige Bildeinheit in jedem aus einer kontinuierlichen Folge von zweidimensionalen Eingangsbildern der Zielszene beschreibt, um dadurch eine Bildmerkmalsfolge zu erzeugen, worin die Bildmerkmale Merkmale umfassen, die aus Bereichen der Bildeinheit mit einer hohen Dichte von Punkten aus dem Querschnitt der Disparitätskarte extrahiert wurden; und
einen Ermittlungsteil (940), der dafür konfiguriert ist, das straßenteilende Objekt auf der Grundlage der Bildmerkmalsfolge zu ermitteln, worin Merkmale, die konstant bleiben oder sich entlang der Merkmalsfolge periodisch ändern, teilenden Objekten entsprechen.

11. Programm zum Veranlassen, dass ein Computer das Verfahren nach Anspruch 1 ausführt.

12. Nichtflüchtiges computerlesbares Medium, das computerausführbare Anweisungen zur Ausführung durch ein Verarbeitungssystem speichert, worin die computerausführbaren Anweisungen, wenn sie ausgeführt werden, das Verarbeitungssystem veranlassen, das Verfahren nach Anspruch 1 auszuführen.

## Revendications

1. Procédé pour détecter un objet de division de route dans une scène cible tridimensionnelle, comprenant:
l'obtention d'une image d'entrée bidimensionnelle de la scène cible (S210) en utilisant une partie de capture d'image, dans lequel la partie de capture d'image est une caméra montée sur un véhicule et l'image d'entrée comprend en outre une carte de disparité;
la sélection d'une unité d'image à partir de l'image d'entrée (S220), l'unité d'image couvrant une région d'objet de division de route de l'image d'entrée, dans lequel l'unité d'image comprend une section transversale de la carte de disparité à une distance prédéterminée de la partie de capture d'image et une taille et une position de l'unité d'image dans l'image d'entrée reste inchangée dans la séquence continue d'images d'entrée;
l'extraction d'une caractéristique d'image respective en tant que valeur décrivant l'unité d'image respective dans chacune d'une séquence continue d'images d'entrée bidimensionnelles de la scène cible, de façon à générer une séquence de caractéristiques d'image (S230), dans laquelle les caractéristiques d'image comprennent des caractéristiques extraites de régions de l'unité d'image avec une densité élevée de points à partir de la section transversale de la carte de disparité; et
la détection de l'objet de division de la route sur la base de la séquence de caractéristiques d'image (S240), dans lequel les caractéristiques qui restent constantes ou changent périodiquement le long de la séquence de caractéristiques correspondent à des objets de division.

2. Procédé selon la revendication 1, dans lequel, la sélection de l'unité d'image à partir de l'image d'entrée comprend:
le fait d'effectuer un prétraitement sur l'image d'entrée de manière à acquérir un emplacement de l'objet de division de la route dans l'image d'entrée; et
la sélection, à partir de l'image d'entrée, d'une région spécifique couvrant l'emplacement acquis de l'objet de division de la route, pour servir d'unité d'image.

3. Procédé selon la revendication 2, dans lequel le prétraitement comprend l'application d'un algorithme de détection des bords à l'image d'entrée.

4. Procédé selon l'une quelconque des revendications 1 à 3, dans lequel, la détection de l'objet de division de route sur la base de la séquence de caractéristiques d'image comprend:
l'extraction d'une caractéristique d'image à partir de la séquence de caractéristiques d'image; et
la détection de l'objet de division de la route sur la base de la caractéristique d'image.

5. Procédé selon la revendication 4, dans lequel,
la caractéristique de l'image est au moins une caractéristique parmi (i) une caractéristique continue, ou (ii) une caractéristique périodique.

6. Procédé selon la revendication 5, comprenant en outre:
la détection d'une vitesse de déplacement de la partie de capture d'image pour capturer les images d'entrée continues de la scène cible;
la correction, sur la base de la vitesse de déplacement, de positions basées sur des séries temporelles de deux images adjacentes quelconques parmi les images d'entrée continues de manière à acquérir une séquence de caractéristiques d'image corrigée; et
l'extraction de la caractéristique périodique de la séquence de caractéristiques d'image corrigée.

7. Procédé selon la revendication 4, dans lequel la détection de l'objet de division de route sur la base de la caractéristique d'image comprend:
l'obtention de points de pixels dans une image d'entrée, correspondant à la caractéristique d'image;
la projection des points de pixels sur les axes X et Y de l'image d'entrée de manière à acquérir la projection des points de pixels; et
la détection de l'objet de division de la route sur la base de la projection des points de pixels.

8. Procédé selon la revendication 1, dans lequel,
la sélection de l'unité d'image à partir de l'image d'entrée comprend:
la sélection de plusieurs unités d'image à partir de l'image d'entrée, et
l'extraction de la caractéristique d'image respective comme une valeur décrivant l'unité d'image respective dans chacune de la séquence continue d'images d'entrée bidimensionnelles comprend:
l'extraction d'une caractéristique d'image à l'intérieur de chacune des plusieurs unités d'image dans chacune des images d'entrée continues de manière à générer plusieurs séquences de caractéristiques d'image.

9. Procédé selon la revendication 8, comprenant en outre:
la détermination d'une relation de correspondance entre une première unité d'image et une deuxième unité d'image parmi la pluralité d'unités d'image; et
l'utilisation, sur la base de la relation de correspondance, de la caractéristique d'image extraite à l'intérieur de la première unité d'image dans une première image de la séquence continue d'images d'entrée bidimensionnelles pour améliorer la caractéristique d'image extraite à l'intérieur de la deuxième unité d'image dans une deuxième image d'entrée avant la première image de la séquence continue d'images d'entrée bidimensionnelles.

10. Dispositif (900) pour détecter un objet de division de route dans une scène cible tridimensionnelle, comprenant:
une partie d'obtention (910) configurée pour obtenir une image d'entrée bidimensionnelle de la scène cible en utilisant une partie de capture d'image, dans laquelle la partie de capture d'image est une caméra montée sur un véhicule et l'image d'entrée comprend en outre une carte de disparité;
une partie de sélection (920) configurée pour sélectionner une unité d'image à partir de l'image d'entrée, l'unité d'image couvrant une région d'objet de division de route de l'image d'entrée, dans laquelle l'unité d'image comprend une section transversale de la carte de disparité à une distance prédéterminée de la partie de capture d'image et une taille et une position de l'unité d'image dans l'image d'entrée restent inchangées dans la séquence continue d'images d'entrée;
une partie d'extraction (930) configurée pour extraire une caractéristique d'image respective en tant que valeur décrivant l'unité d'image respective dans chacune d'une séquence continue d'images d'entrée bidimensionnelles de la scène cible pour générer une séquence de caractéristiques d'image, dans lequel les caractéristiques d'image comprennent des caractéristiques extraites de régions de l'unité d'image avec une densité élevée de points à partir de la section transversale de la carte de disparité; et
une partie de détection (940) configurée pour détecter l'objet de division de route sur la base de la séquence de caractéristiques d'image, dans laquelle les caractéristiques qui restent constantes ou changent périodiquement le long de la séquence de caractéristiques correspondent à des objets de division.

11. Programme pour amener un ordinateur à exécuter le procédé selon la revendication 1.

12. Support lisible par ordinateur non transitoire stockant des instructions exécutables par ordinateur pour une exécution par un système de traitement, dans lequel les instructions exécutables par ordinateur, lorsqu'elles sont exécutées, amènent le système de traitement à réaliser le procédé selon la revendication 1.
